# EUROPÄISCHE PATENTSCHRIFT

(11) **EP 1 910 119 B1**
(45) Veröffentlichungstag und Bekanntmachung des Hinweises auf die Patenterteilung: **07.03.2012**
(21) Anmeldenummer: 06791743.5
(22) Anmeldetag: 31.08.2006
(51) Int. Cl.: B60K 11/04, F28F 9/00

(54) **BEFESTIGUNGS- UND VERBINDUNGSELEMENT FÜR WÄRMEÜBERTRAGER UND AN ORDNUNG VON WÄRMEÜBERTRAGERN IN EINEM KRAFTFAHRZEUG**
FASTENING AND JOINING ELEMENT FOR HEAT EXCHANGERS, AND HEAT EXCHANGER ASSEMBLY IN A MOTOR VEHICLE
ELEMENT DE FIXATION ET DE RACCORD POUR DES ECHANGEURS THERMIQUES ET SYSTEME D'ECHANGEURS THERMIQUES DANS UN VEHICULE AUTOMOBILE

(30) Priorität: 15.09.2005 DE 102005043937
(43) Veröffentlichungstag der Anmeldung: 16.04.2008
(73) Patentinhaber: HBPO GmbH, 59552 Lippstadt (DE)
(72) Erfinder: KERSTING, Dirk, 59555 Lippstadt (DE); SCHMIDT, Andre, 59073 Hamm (DE); KORTE, Walter, 59597 Erwitte (DE)
(74) Vertreter: Heumann, Christian
(86) Internationale Anmeldenummer: PCT/EP2006/008498
(87) Internationale Veröffentlichungsnummer: WO 2007/031197

(56) Entgegenhaltungen:
- DE-A1- 10 340 566
- DE-A1-102004 058 724

## Beschreibung

Die Erfindung betrifft ein Befestigungs- und Verbindungselement nach dem Oberbegriff des Patentanspruches 1 sowie eine Anordnung von Wärmeübertragern in einem Kraftfahrzeug nach dem Oberbegriff des Patentanspruches 14.

Anordnungen von Wärmeübertragern in einem Kraftfahrzeug sind als so genannte Kühlmodule bekannt, d. h. als vormontierte Baueinheit, welche beispielsweise aus einem Kühlmittelkühler, einem Kältemittelkondensator, einem Ladeluftkühler und/oder einem Ölkühler besteht, welche sekundärseitig von Umgebungsluft gekühlt werden. Das Kühlmodul kann auch mit einem so genannten Montageträger verbunden und zu einem Frontmodul ergänzt werden, welches zusätzliche Komponenten wie z. B. die Scheinwerfer des Fahrzeuges aufnimmt. Ein Problem bei derartigen Kühlmodulen ist die Befestigung der Wärmeübertrager untereinander und gegenüber einem Modulträger oder Montageträger. Sofern die Wärmeübertrager Sammelkästen aus Kunststoff aufweisen, also z. B. Kühlmittelkühler, lassen sich Befestigungselemente einfach an den Wasserkästen aus Kunststoff anspritzen. Bei anderen Wärmeübertragern, welche vollständig aus Metallteilen bestehen, z. B. Ganzaluminiumwärmeübertrager, bestehen diese günstigen Befestigungsmöglichkeiten nicht, vielmehr müssen Halter zusätzlich an den Ganzmetallwärmeübertragern befestigt werden, beispielsweise durch Löten, was kostenaufwändig ist.

Durch die DE 103 40 566 A1 wurde eine Befestigungsanordnung für zwei Wärmeübertrager eines Kraftfahrzeuges, insbesondere einen Kühlmittelkühler und einen Kältemittelkondensator bekannt. Die Befestigungsanordnung umfasst so genannte Montageeinrichtungen, welche als Befestigungs- und Aufnahmeelemente ausgebildet sind und die oberen sowie die unteren Eckbereiche der beiden Wärmeübertrager umgreifen. Zur Befestigung der Wärmeübertrager gegenüber dem Kraftfahrzeug weisen die Montageinrichtungen seitlich und stirnseitig angeordnete Befestigungszapfen, so genannte Vorsprünge auf, welche sich seitlich zu den Seitenteilen der beiden Wärmeübertrager erstrecken. Die seitlich abragenden Vorsprünge weisen einen konischen Endbereich auf und werden in eine nicht näher bezeichnete Aufnahmeöffnung eingeführt.

Durch die DE 10 2004 058 724 A1 wurde eine Baugruppe von GanzmetallWärmeübertragern, ein sogenanntes Kühlmodul, bestehend aus einem Aluminiumkühler und einem Aluminiumkondensator, für Kraftfahrzeuge bekannt. Das Kühlmodul wird mittels metallischer Montageträger, die jeweils einen Montagestift aufweisen, im Motorraum des Fahrzeuges befestigt. Kühler und Kondensator weisen metallische Sammelkästen bzw. Sammelrohre auf, an welchen die Montageträger durch Verschraubung und Verstiftung befestigt werden.

Durch die DE 601 00 953 T2 (EP 1 319 579 B1) wurde ein Frontmodul für Kraftfahrzeuge bekannt, welches einen rahmenförmigen Montageträger umfasst, der einzelne Kühlkomponenten wie einen Kühlmittelkühler und einen Kondensator aufnimmt. Dabei sind beide Wärmeübertrager jeweils an ihrer Unterseite über Stützscheiben gegenüber dem Montageträger abgestützt und gehalten, während sie an ihrer Oberseite durch Clipsverbindungen in Form von zusätzlichen Metallklammern mit dem Montageträger verbunden werden. Nachteilig bei der bekannten Befestigung ist, dass die Wärmeübertrager speziell an die gewählte Befestigungsart angepasst werden müssen, d. h. sie müssen mit speziellen Haltestiften versehen werden.

Durch die EP 1 413 501 A1 wurde ein weiteres Frontmodul für Kraftfahrzeuge bekannt, welches einen als offenen Rahmen ausgebildeten Montageträger aufweist, welcher an seiner Oberseite durch eine bewegliche Traverse, eine so genannte Schlossbrücke, geschlossen wird. In dem Montageträger sind ein Kühlmittelkühler und ein Kondensator aufgenommen, welche an ihren unteren und oberen Seiten jeweils über Stützplatten gegenüber dem Montageträger befestigt sind. Dabei greifen an den Wärmeübertragern angebrachte Lagerzapfen in Bohrungen der Stützplatten ein. Nachteilig bei dieser Befestigung ist ebenfalls, dass die Wärmeübertrager mit zusätzlichen Befestigungselementen, hier Lagerzapfen, ausgestattet werden müssen, was die Herstellung dieser Wärmeübertrager verteuert.

Durch das DE 297 12 351 U1 wurde eine Anordnung von Wärmeübertragern in einem Kraftfahrzeug, ein Kühlmodul, bestehend aus einem Kühlmittelkühler und einem Kältemittelkondensator, bekannt. Der Kühlmittelkühler ist mechanisch gefertigt, d. h. er weist einen Sammel- oder Wasserkasten aus Kunststoff auf, welcher mechanisch über eine Bördelverbindung mit einem Rohrboden verbunden ist. An den Kunststoffwasserkasten sind Rast- und Haltelemente angespritzt, welche der Befestigung von weiteren Kühlkomponenten dienen. Der Kondensator ist als Ganzaluminiumwärmeübertrager mit Sammelrohren und Sammler aus Aluminiumwerkstoffen hergestellt. Am Kondensator, d. h. an seinem Sammelbehälter sind daher Befestigungslaschen in Form von Aluminiumblechteilen angelötet, welche mit der angespritzten Rastverbindung des Kunststoffwasserkastens verbunden und verrastet werden. Nachteilig bei dieser Lösung ist der zusätzliche konstruktive und herstellungstechnische Aufwand, der für die Anbringung der zusätzlichen Haltelaschen am Kondensator erforderlich ist.

Es ist Aufgabe der vorliegenden Erfindung, eine vereinfachte und kostengünstige Lösung zur Befestigung von Wärmeübertragern untereinander und gegenüber einem fahrzeugseitig abgestützten Träger zu schaffen. Darüber hinaus ist es Aufgabe der vorliegenden Erfindung, bei einer Anordnung von Wärmeübertragern im Kraftfahrzeug eine einfache und kostengünstige Befestigung zu schaffen, wobei die Wärmeübertrager, insbesondere solche in Ganzaluminiumbauweise, ohne zusätzlich anzubringende Befestigungsmittel verwendet werden können.

Diese Aufgabe wird zunächst durch die Merkmale des Patentanspruches 1 gelöst. Vorteilhafte Ausgestaltungen der Erfindung ergeben sich aus den Unteransprüchen.

Erfindungsgemäß besteht das Befestigungs- und Verbindungselement aus einer Aufnahmeöffnung, welche einen Wärmeübertrager formschlüssig aufnimmt, und einem Befestigungsteil, mit welchem das Befestigungs- und Verbindungselement an einem anderen Teil, z. B. einem anderen Wärmeübertrager oder einem Montageträger befestigt werden kann. Der Befestigungsteil weist ein Befestigungsprofil auf, z. B. ein U-Profil, welches mit einem entsprechenden Gegenprofil an einem Wärmeübertrager oder einem Montageträger gefügt werden kann und somit einen Formschluss, insbesondere eine Verdrehsicherung bewirkt. Das Befestigungsprofil kann auch kastenförmig ausgebildet sein, d. h. vier etwa rechtwinklig zueinander angeordnete Anlageflächen aufweisen, welche ein entsprechendes Gegenstück, einen kastenförmig ausgebildeten Stumpf, umfassen. Dieser Stumpf kann vorteilhafterweise als Schraubdom in Kunststoff ausgebildet sein, welcher entweder an einem Wärmeübertrager mit Kunststoffkästen oder einem Montageträger aus Kunststoff angeordnet und angespritzt ist. Das Befestigungselement wird dann zusätzlich durch eine selbstschneidende Schraube, welche in den Schraubdom eingeschraubt wird, gesichert. Die Aufnahmeöffnung des Befestigungs- und Verbindungselementes ist an den zu befestigenden Wärmeübertrager angepasst, beispielsweise an das Sammelrohr eines Ganzaluminiumkondensators. Die Aufnahmeöffnung ist quasi als Tasche ausgebildet, welche stirnseitig auf das Sammelrohr des Kondensators aufsteckbar ist, so dass dieser spielfrei gehalten ist. Mit diesem wieder verwendbaren Befestigungs- und Verbindungselement wird der Vorteil einer einfachen und kostengünstigen Befestigung von zwei Wärmeübertragern, insbesondere einem Kühlmittelkühler mit Kunststoffkasten und einem Ganzaluminiumwärmeübertrager wie einem Kondensator erreicht. Der Kondensator benötigt keine Befestigungsmittel, die zusätzlich angelötet werden müssen, er kann somit "befestigungsneutral" hergestellt werden, was die Herstellkosten des Kondensators reduziert. Der Befestigungsansatz, insbesondere als Schraubdom am Kühlmittelkühler ausgebildet, ist ebenfalls einfach und kostengünstig herstellbar - er verteuert die Herstellkosten des Kühlers nicht oder nur unwesentlich.

Nach einer vorteilhaften Ausgestaltung der Erfindung weist das Befestigungs- und Verbindungselement zwei koaxial hintereinander angeordnete Aufnahmeöffnungen auf, die stirnseitig durch eine Trennwand geteilt sind, auf. Dadurch ist es möglich, dass das Befestigungs- und Verbindungselement für beide Stirnseiten des Kondensators, d. h. auf "Umschlag" verwendet werden kann.

Nach einer weiteren vorteilhaften Ausgestaltung der Erfindung weist das Befestigungs- und Verbindungselement eine zweite von der ersten verschiedene Aufnahmeöffnung auf, welche seitlich neben der ersten angeordnet und ebenfalls als eine Art Tasche ausgebildet ist. Auch die zweite Aufnahmeöffnung ist in ihrem Profil an einen weiteren aufzunehmenden Wärmeübertrager angepasst, z. B. an einen Ganzaluminiumkühlmittelkühler, welcher keinen Kunststoff-, sondern einen Aluminiumwasserkasten aufweist. Letzterer ist in der Regel etwa kastenförmig ausgebildet und kann daher leicht durch ein entsprechendes kastenförmiges Profil der Aufnahmeöffnung umfasst werden. Beide nebeneinander angeordneten Aufnahmeöffnungen können somit gleichzeitig über die Stirnseiten von zwei parallel zueinander angeordneten Wärmeübertragern geschoben werden und halten diese dann wie eine Klammer zusammen. Mit dem Befestigungsteil kann das Befestigungs- und Verbindungselement an einem Montageträger befestigt werden, welcher vorzugsweise einen profilierten Schraubdom aufweist. Damit können beide Wärmeübertrager mit minimalem Herstellungsaufwand miteinander verbunden und am Montageträger befestigt werden. Der Ganzmetallkühler benötigt also - ebenso wie der Kondensator - keine zusätzlichen Befestigungsmittel.

In vorteilhafter Ausgestaltung der Erfindung ist das Befestigungs- und Verbindungselement als Kunststoffspritzteil ausgebildet, somit kostengünstig herstellbar und passt - wie "angegossen" - auf die Wärmeübertrager, was einen spielfreien Sitz gewährleistet.

In weiterer vorteilhafter Ausgestaltung der Erfindung ist in einer Aufnahmeöffnung, vorzugsweise der größeren, ein elastisches Ausgleichselement angeordnet, welches sich an der Stirnseite des Kühlmittelkastens abstützt. Damit wird ein Toleranzausgleich zwischen beiden Wärmeübertragern, Kühlmittelkühler und Kondensator, geschaffen, welche betriebsbedingt unterschiedliche Ausdehnungen aufweisen.

Die Aufgabe der Erfindung wird auch durch die Merkmale des Patentanspruches 16 gelöst, d. h. für eine Anordnung von zu einer Baueinheit oder einem Modul verbundenen Wärmeübertragern, welche durch die erfindungsgemä-βen Befestigungselemente verbunden werden oder an einem Montageträger eines Frontmoduls befestigt sind. Die erfindungsgemäßen Befestigungselemente sind einerseits für die Verbindung von Wärmeübertragern eines Kühlmoduls geeignet, welches aus einem mechanisch gefügten Wärmeübertrager mit Kunststoffkasten und einem Ganzmetallwärmeübertrager besteht. Darüber hinaus ist die erweiterte Ausführung des erfindungsgemäßen Befestigungs- und Verbindungselementes mit zwei Aufnahmeöffnungen besonders für die Verbindung von zwei Ganzmetallwärmeübertragern, z. B. einem Kondensator und einem Kühlmittelkühler geeignet, welche gleichzeitig an einem Modulträger befestigt sind. Vorzugsweise werden jeweils vier Verbindungs- und Befestigungselemente, d. h. an den vier Eckpunkten der Wärmeübertrager verwendet. Die Montage der Wärmeübertrager ist denkbar einfach, da die Befestigungs- und Verbindungselemente lediglich von beiden Seiten wie Kappen auf die Stirn- oder Eckbereiche der Wärmeübertrager aufgeschoben werden.

Ausführungsbeispiele der Erfindung sind in der Zeichnung dargestellt und werden im Folgenden näher erläutert. Es zeigen
- Fig. 1: einen Ausschnitt eines Kühlmoduls mit erfindungsgemäßem Befestigungs- und Verbindungselement (erstes Ausführungsbeispiel),
- Fig. 2: einen weiteren Ausschnitt des Kühlmoduls gemäß Fig. 1,
- Fig. 3a, Fig. 3b: das erfindungsgemäße Befestigungs- und Verbindungselement in unterschiedlichen isometrischen Darstellungen,
- Fig. 4: einen Ausschnitt eines weiteren Kühlmoduls mit einem zweiten Ausführungsbeispiel des erfindungsgemäßen Befestigungs- und Verbindungselements,
- Fig. 5: eine andere isometrische Darstellung des Kühlmoduls gemäß Fig. 4,
- Fig. 6: das zweite Ausführungsbeispiel des erfindungsgemäßen Befestigungs- und Verbindungselementes,
- Fig. 7: das Befestigungs- und Verbindungselement gemäß Fig. 6 in einer anderen isometrischen Darstellung.

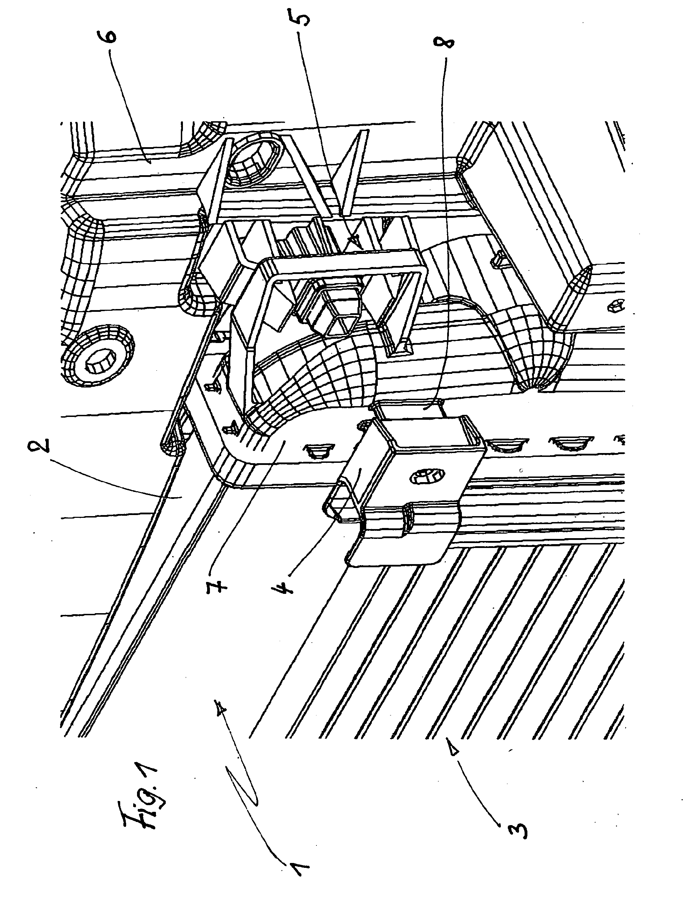

**Fig. 1** zeigt einen Ausschnitt eines Kühlmoduls 1 in isometrischer Darstellung. Das Kühlmodul 1 besteht aus einem mechanisch gefertigten Kühlmittelkühler 2 und einem gelöteten Kondensator in Ganzaluminiumbauweise. Beide Wärmeübertrager 2, 3 sind durch ein Befestigungs- und Verbindungselement 4 miteinander verbunden, während der Kühlmittelkühler 2, im Folgenden kurz Kühler 2 genannt, über eine nicht näher erläuterte Rastverbindung 5 mit einem Modul- oder Montageträger 6 verbunden ist. Der Kühler 2 ist somit Träger für den Kondensator 3, während der Modulträger 6 Träger für das gesamte Kühlmodul gegenüber einem nicht dargestellten Kraftfahrzeug ist. Anstelle des Modulträgers 6 kann ebenso ein Montageträger eines nicht dargestellten Frontmoduls Träger des Kühlmoduls 1 sein. Der Kühler 2 weist einen Kühlmittelkasten 7 aus Kunststoff auf, an dessen dem Kondensator 3 zugewandter Längsseite ein Schraubdom 8 angespritzt ist, welcher teilweise durch das auf den Schraubdom 8 aufgesetzte und mit ihm verbundene Befestigungs- und Verbindungselement 4 verdeckt ist. Der Kondensator 3 weist ein Sammelrohr 9 auf, welches von dem Befestigungs- und Verbindungselement 4 formschlüssig aufgenommen und gehalten wird. Insgesamt sind - was nicht dargestellt ist - vier Befestigungs- und Verbindungselemente 4 für die gegenseitige Befestigung von Kondensator 3 und Kühler 2 vorgesehen, und zwar jeweils - wie dargestellt - an den Eckbereichen.

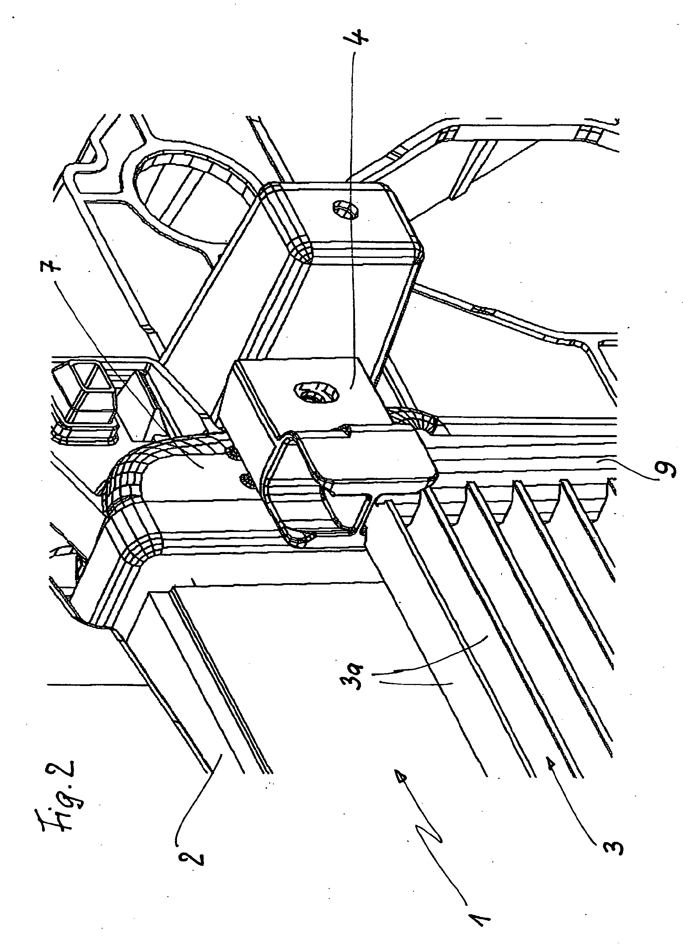

**Fig. 2** zeigt das Kühlmodul 1 aus einer anderen Perspektive, d. h. mit Blickrichtung auf die Unterseite des Sammelrohres 9 und des Befestigungs- und Verbindungselementes 4. Im Übrigen werden für gleiche Teile gleiche Bezugszahlen verwendet wie in Fig. 1. Wie aus der Darstellung ersichtlich, umschließt das Befestigungs- und Verbindungselement 4 das stirnseitige Ende des Sammelrohres 9 im Wesentlichen auf drei Seiten, während die vierte, die untere Seite, auf der Flachrohre 3a angeordnet sind, frei bleibt. Die Geometrie und Funktion des Befestigungs- und Verbindungselementes 4 wird im Folgenden genauer erläutert.

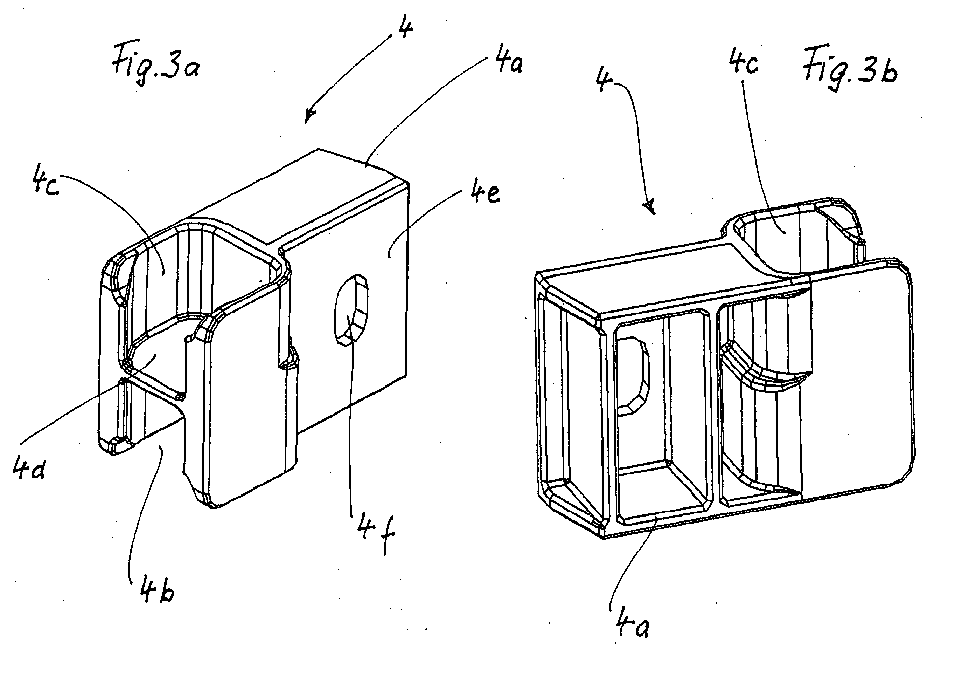

**Fig. 3a, Fig. 3b** zeigen das Befestigungs- und Verbindungselement 4 (im Folgenden auch kurz Element 4 genannt) in zwei verschiedenen Perspektiven als Einzelteil. Das Element 4 weist einerseits einen kastenförmig ausgebildeten Befestigungsteil 4a und andererseits zwei koaxial zueinander angeordnete Aufnahmeöffnungen 4b, 4c auf, welche durch eine Trennwand 4d voneinander abgeteilt und stirnseitig zu entgegengesetzten Richtungen offen ausgebildet sind. Beide Aufnahmeöffnungen 4b, 4c weisen ein Profil auf, welches etwa C-förmig ausgebildet und dem Profil des Sammelrohres 9 (vgl. Fig. 2) angepasst ist. In Fig. 1 und 2 nimmt die Aufnahmeöffnung 4b das stirnseitige Ende des Sammelrohres 9 formschlüssig auf. Der Befestigungsteil 4a ist als offener Kasten ausgebildet mit einem Boden 4e, in welchem eine als Langloch ausgebildete Öffnung 4f angeordnet ist. In Fig. 1 und Fig. 2 ist der Kasten 4a über den Schraubdom 8 gestülpt, formschlüssig gehalten und durch eine nicht dargestellte, selbstschneidende Schraube, welche durch die Öffnung 4f gesteckt ist, am Kühlmittelkasten 7 befestigt. Das Element 4 kann "auf Umschlag" verwendet werden, d. h. sowohl für die rechte als auch für die linke Stirnseite des Sammelrohres 9, welche einmal von der Aufnahmeöffnung 4b und das andere Mal von der Aufnahmeöffnung 4c aufgenommen wird. Die Abstützung in Längsrichtung des Sammelrohres 9 erfolgt über die Trennwand 4d. Das Element 4 ist vorzugsweise als Kunststoffspritzteil herstellbar.

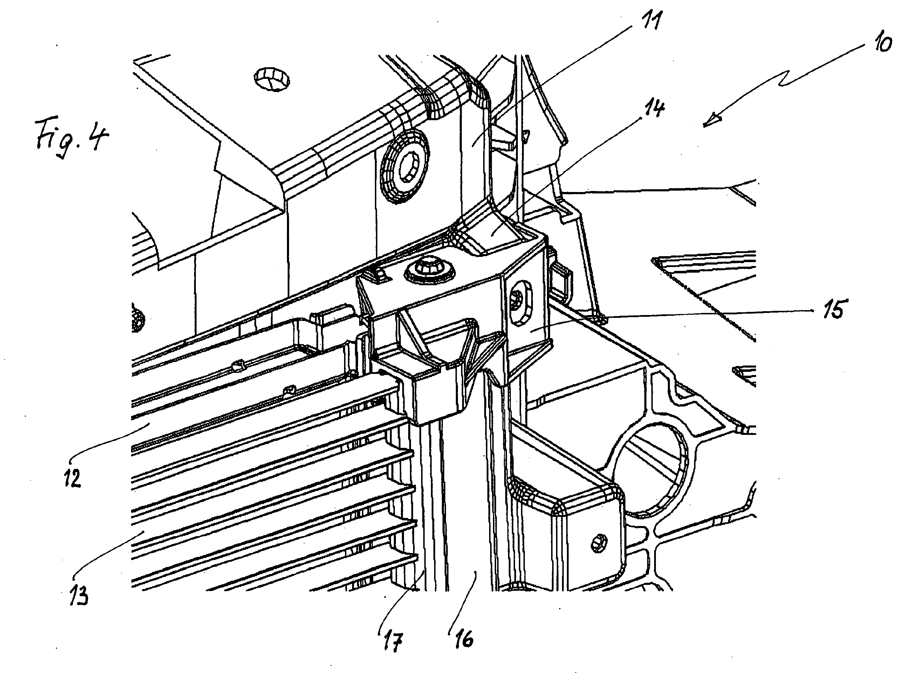

**Fig. 4** zeigt ein weiteres Ausführungsbeispiel der Erfindung für ein Frontmodul 10, welches als Ausschnitt in 3-D-Darstellung dargestellt ist. Ein Montageträger 11 des Frontmoduls 10 ist Träger von zwei Wärmeübertragern, einem Ganzaluminiumkühlmittelkühler 12 und einem Ganzaluminiumkondensator 13 - beide Wärmeübertrager 12, 13 sind also komplett gelötet. Der Montageträger 11 ist vorzugsweise aus Kunststoff herstellbar und weist einen angespritzten Schraubdom 14 auf, an welchem ein Befestigungs- und Verbindungselement 15 (zweite Ausführungsform) befestigt ist. Letzteres übergreift mit zwei nebeneinander angeordneten, unten zu erläuternden Aufnahmeöffnungen die Eckbereiche der beiden Ganzmetallwärmeübertrager 12, 13, wobei der Ganzmetallkühler 12 einen etwa kastenförmig ausgebildeten Kühlmittelkasten 16 und der Kondensator 13 ein im Wesentlichen kreiszylindrisch ausgebildetes Sammelrohr 17 aufweisen.

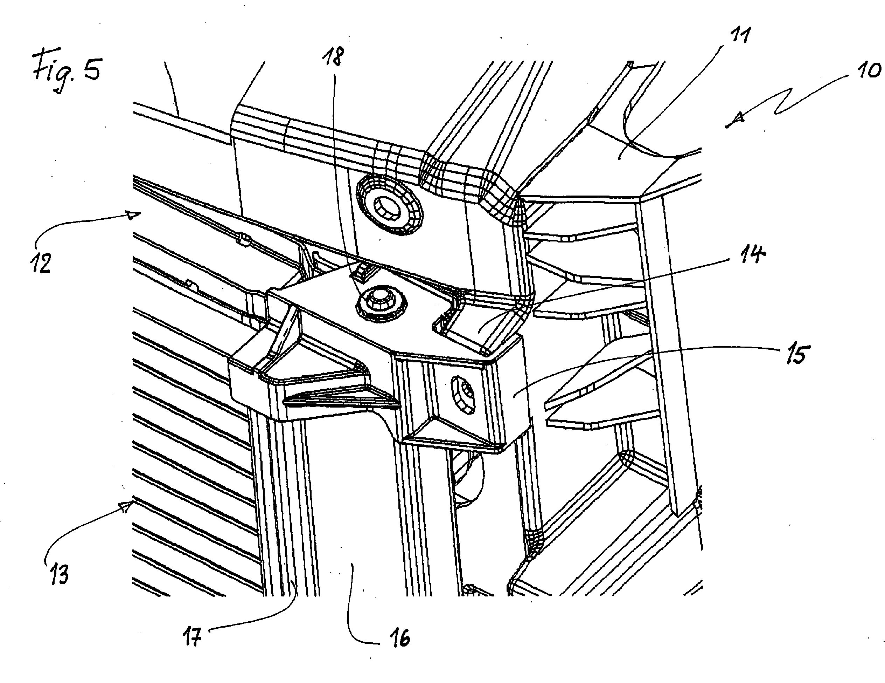

**Fig. 5** zeigt den Ausschnitt des Frontmoduls 10 in einer anderen Perspektive, wobei wiederum für gleiche Teile gleiche Bezugszahlen verwendet werden. Aus der Darstellung ist zu entnehmen, dass das Befestigungs- und Verbindungselement 15 einerseits den Schraubdom 14 formschlüssig und andererseits den Kühlmittelkasten 16 und das Sammelrohr 17 formschlüssig umgreift. Ein elastisches Ausgleichselement 18, welches in eine Stirnwand des Befestigungs- und Verbindungselementes 15 eingesetzt ist, liegt - was nicht sichtbar ist - an der Stirnfläche des Kühlmittelkastens 16 an und sorgt für einen Toleranzausgleich der beiden Wärmeübertrager 12, 13. Für die Montage der beiden Wärmeübertrager 12, 13 werden vorzugsweise vier Elemente 4 (z. T. spiegelbildlich ausgebildet) verwendet.

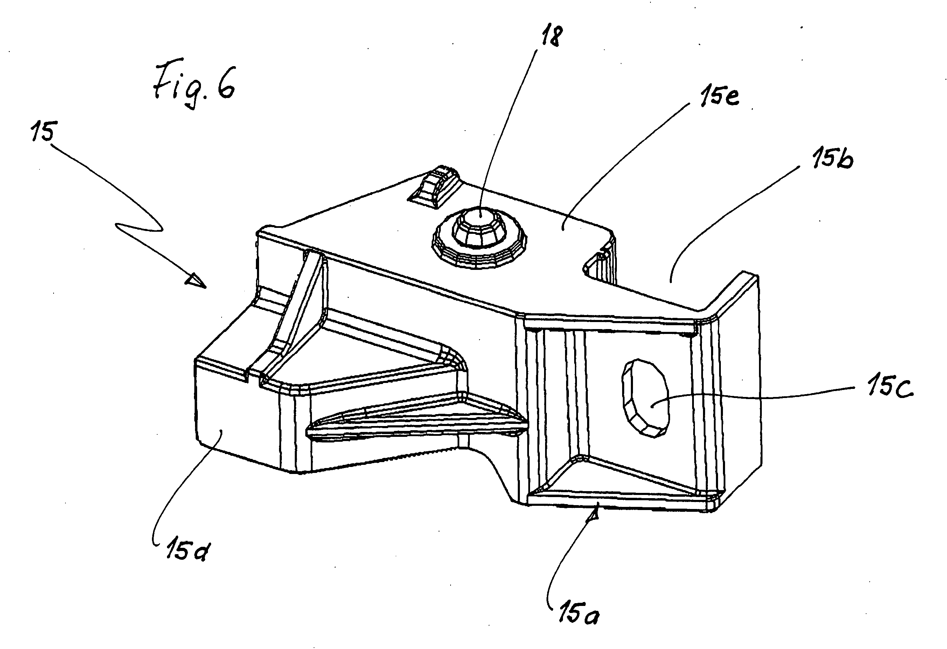

**Fig. 6**. zeigt das Befestigungs- und Verbindungselement 15 als Einzelteil in einer isometrischen Darstellung. Das Element 15 weist einen Befestigungsteil 15a mit einem U-Profil 15b und einer Befestigungsöffnung 15c auf. Das Befestigungsprofil 15b übergreift den Schraubdom 14 (vgl. Fig. 5); durch die Befestigungsöffnung 15c wird eine nicht dargestellte, selbstschneidende Schraube eingesetzt, die in den Schraubdom 14 eingeschnitten wird. Damit ist das Element 15 formschlüssig und kraftschlüssig am Montageträger 11 befestigt. Das Element 15 weist ferner zwei mit - hier nicht sichtbaren - Aufnahmeöffnungen versehene, nebeneinander angeordnete Taschen 15d, 15e auf. In die Tasche 15e ist das elastische Ausgleichselement 18 eingesetzt.

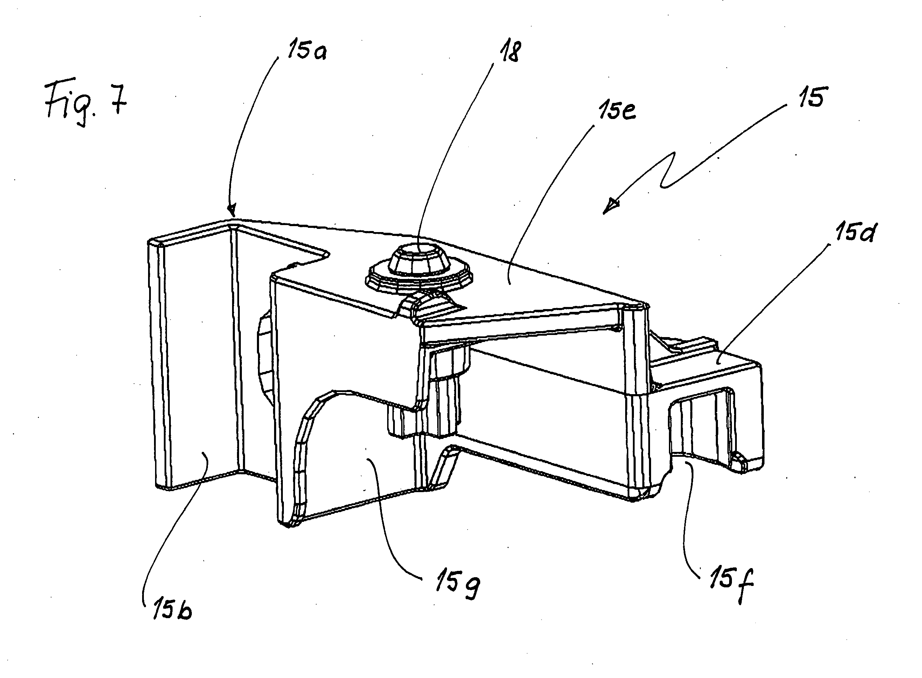

**Fig. 7** zeigt eine andere Perspektive des Elementes 15, welches etwa um 180° um eine Hochachse gedreht wurde, welche etwa der Achse des elastischen Ausgleichselements 18 entspricht. Es werden wiederum gleiche Bezugszahlen für gleiche Teile verwendet. In dieser Darstellung sind die zwei nebeneinander angeordnete Aufnahmeöffnungen 15f, 15g erkennbar, die den Taschen 15d, 15e entsprechen. Das in die Tasche 15e eingesetzte elastische Ausgleichselement 18 gewährleistet einen Ausgleich unterschiedlicher Dehnungen der beiden Wärmeübertrager 12, 13 Form und Größe der beiden Aufnahmeöffnung 15f, 15g sind an die jeweiligen Wärmeübertrager bzw. ihre Sammelkästen oder Sammelrohre angepasst. Auch das Element 15 ist als wieder verwendbares Kunststoffspritzteil herstellbar.

### Bezugszeichen:

- 1: Kühlmodul
- 2: Kühlmittelkühler
- 3: Kondensator
- 4: Befestigungs- und Verbindungselement
- 4a: Befestigungsteil
- 4b: Aufnahmeöffnung
- 4c: Aufnahmeöffnung
- 4d: Trennwand
- 4e: Kastenboden
- 4f: Öffnung
- 5: Rastverbindung
- 6: Modulträger
- 7: Kühlmittelkasten (Kunststoff)
- 8: Schraubdom
- 9: Sammelrohr (Kondensator)
- 10: Frontmodul
- 11: Montageträger
- 12: Kühlmittelkühler
- 13: Kondensator
- 14: Schraubdom
- 15: Befestigungs- und Verbindungselement
- 15a: Befestigungsteil
- 15b: Befestigungsprofil
- 15c: Befestigungsöffnung
- 15d: Tasche
- 15e: Tasche
- 15f: Aufnahmeöffnung
- 15g: Aufnahmeöffnung
- 16: Kühlmittelkasten (Alu)
- 17: Sammelrohr
- 18: Ausgleichselement

## Patentansprüche

1. Befestigungs- und Verbindungselement (4) zur Befestigung und Verbindung von Wärmeübertragern (2, 3) einer Wärmeübertrageranordnung (1) in einem Kraftfahrzeug, **gekennzeichnet durch** einen Befestigungsteil (4a) mit einem Befestigungsprofil, welches mit einem Gegenprofil (8) fügbar ist, und zwei gleiche Aufnahmeöffnungen (4b, 4c) zur formschlüssigen Aufnahme eines Wärmeübertragers (3), wobei die beiden Aufnahmeöffnungen (4b, 4c) koaxial hintereinander angeordnet und stimseitig **durch** eine Trennwand (4d) voneinander abgeteilt sind und wobei das Gegenprofil als frontal in Richtung des Wärmeübertragers (3) abragender Schraubdom (8), insbesondere aus Kunststoff ausgebildet ist.

2. Befestigungs- und Verbindungselement nach Anspruch 1, **dadurch gekennzeichnet, dass** die Aufnahmeöffnungen (4b, 4c) ein C-Profil zur Aufnahme eines zylindrischen Sammelrohres (9) des Wärmeübertragers (3) aufweisen.

3. Befestigungs- und Verbindungselement nach Anspruch 1 oder 2, **dadurch gekennzeichnet, dass** das Befestigungsprofil als Kastenprofil (4a, 4e) und das Gegenprofil als kastenförmiger Stumpf (8) ausgebildet sind.

4. Befestigungs- und Verbindungselement nach einem der Ansprüche 1 bis 3, **dadurch gekennzeichnet, dass** das Befestigungsprofil (4a, 4e) mit dem Gegenprofil (8) verschraubbar, insbesondere mittels einer selbstschneidenden Schraube ist.

5. Befestigungs- und Verbindungselement nach mindestens einem der vorhergehenden Ansprüche, **dadurch gekennzeichnet, dass** es einstückig als Kunststoffspritzteil (4) herstellbar ist.

6. Anordnung von Wärmeübertragern (2, 3), die zu einer Baueinheit oder einem Modul (1) miteinander verbunden sind, in einem Kraftfahrzeug, **dadurch gekennzeichnet, dass** die Wärmeübertrager (2, 3) durch die Befestigungund Verbindungselemente (4) nach mindestens einem der Ansprüche 1 bis 5 miteinander verbunden sind.

7. Anordnung nach Anspruch 6, **dadurch gekennzeichnet, dass** ein erster Wärmeübertrager als Kältemittelkondensator (3) mit Sammelrohren (9) und ein zweiter Wärmeübertrager als Kohlmittelkühler (2) mit Kühlmittelkästen (7) aus Kunststoff ausgebildet sind und dass der Kondensator (3) von mindestens zwei, vorzugsweise vier Befestigungs- und Verbindungselementen (4) gehalten ist, welche am Kühlmittelkasten (7) des Kühlmittelkühlers (2) befestigt sind.

8. Anordnung nach einem der Ansprüche 6 oder 7, **dadurch gekennzeichnet, dass** der Schraubdom (8) am Kühlmittelkasten (7) des Kühlmiftelkühlers (2), insbesondere eines mechanisch gefügten Kühlers (2) angespritzt ist.

9. Frontmodul (10) eines Kraftfahrzeuges, umfassend Wärmeübertrager (12, 13) und einen Montageträger (11), wobei die Wärmeübertragern (12, 13) durch Befestigungs- und Verbindungselemente (15), welche zwei nebeneinander angeordnete, stirnseitig auf derselben Seite offen ausgebildete Aufnahmeöffnungen (15f, 15g) zur Aufnahme der Wärmeübertrager (12, 13) aufweisen, verbunden und durch die Befestigungs- und Verbindungselemente (15) an dem Montageträger (11) befestigt sind, wobei die Befestigungs- und Verbindungselemente (15) einen Befestigungsteil (15a) mit einem Befestigungsprofil (15b) und der Montageträger (11) ein als Schraubdom (14) ausgebildetes, frontal in Richtung der Wärmeübertrager (12, 13) abragendes Gegenprofil aufweisen, welches mit dem Befestigungsprofil (15b) fügbar ist.

10. Frontmodul nach Anspruch 9, **dadurch gekennzeichnet, dass** ein erster Wärmeübertrager als Kältemittelkondensator (13) mit Sammelrohren (17) und ein zweiter Wärmeübertrager, als Ganzmetall-, insbesondere Ganzatumhiumwärmeübertrager (12) ausgebildet sind und dass die Sammelrohre (17) und die Metall-, insbesondere Aluminiumsammelkästen (16) von mindestens zwei, vorzugsweise vier Befestigungselementen (15) stirnseitig und formschlüssig gehalten sind.

11. Frontmodul nach Anspruch 9 oder 10, **dadurch gekennzeichnet, dass** in die Aufnahmeöffnung (15g) ein elastisches Ausgleichselement (18) einsetzbar ist

## Claims

1. Fastening and connecting element (4) for fastening and connecting heat exchangers (2, 3) of a heat exchanger arrangement (1) in a motor vehicle, **characterized by** a fastening part (4a) with a fastening profile which can be joined to a mating profile (8), and two identical receiving openings (4b, 4c) for receiving a heat exchanger (3) in a form-fitting manner, the two receiving openings (4b, 4c) being arranged coaxially in series and are divided from one another at the end side by a partition (4d), and the mating profile being embodied as a screw dome (8) which protrudes frontally in the direction of the heat exchanger (3) and which is in particular composed of plastic.

2. Fastening and connecting element according to Claim 1, **characterized in that** the receiving openings (4b, 4c) has a C-shaped profile for receiving a cylindrical collecting tube (9) of the heat exchanger (3).

3. Fastening and connecting element according to Claim 1 or 2, **characterized in that** the fastening profile is embodied as a box profile (4a, 4e) and the mating profile is embodied as a box-shaped stub (8).

4. Fastening and connecting element according to one of Claims 1 to 3, **characterized in that** the fastening profile (4a, 4e) can be screwed to the mating profile (8), in particular by means of a self-tapping screw.

5. Fastening and connecting element according to at least one of the preceding claims, **characterized in that** it can be produced in one piece as a plastic injection-molded part (4).

6. Arrangement of heat exchangers (2, 3), which are connected to one another to form a structural unit or a module (1), in a motor vehicle, **characterized in that** the heat exchangers (2, 3) are connected to one another by means of the fastening and connecting elements (4) according to at least one of Claims 1 to 5.

7. Arrangement according to Claim 6, **characterized in that** a first heat exchanger is embodied as a refrigerant condenser (3) with collecting tubes (9) and a second heat exchanger is embodied as a coolant cooler (2) with coolant tanks (7) composed of plastic, and **in that** the condenser (3) is held by at least two, preferably four fastening and connecting elements (4) which are fastened to the coolant tank (7) of the coolant cooler (2).

8. Arrangement according to Claim 6 or 7, **characterized in that** the screw dome (8) is injection-molded on the coolant tank (7) of the coolant cooler (2), in particular of a mechanically joined cooler (2).

9. Front module (10) of a motor vehicle, comprising heat exchangers (12, 13) and an assembly carrier (11), the heat exchangers (12, 13) being connected by means of fastening and connecting elements (15), which have two mutually adjacently arranged receiving openings (15f, 15g), which are formed so as to be open at the end side at the same side, for receiving the heat exchangers (12, 13), and being fastened to the assembly carrier (11) by means of the fastening and connecting elements (15), the fastening and connecting elements (15) having a fastening part (15a) with a fastening profile (15b), and the assembly carrier (11) having a mating profile which is embodied as a screw dome (14) which protrudes frontally in the direction of the heat exchangers (12, 13) and which can be joined to the fastening profile (15b).

10. Front module according to Claim 9, **characterized in that** a first heat exchanger is embodied as a refrigerant condenser (13) with collecting tanks (17) and a second heat exchanger is embodied as a fully-metal, in particular fully-aluminum heat exchanger (12), and **in that** the collecting tubes (17) and the metal, in particular aluminum collecting tanks (16) are held at the end side and in a form-fitting manner by at least two, preferably four fastening elements (15).

11. Front module according to Claim 9 or 10 **characterized in that** an elastic compensating element (18) can be inserted into the receiving opening (15g).

## Revendications

1. Elément de fixation et de raccord (4) pour la fixation et le raccordement d'échangeurs de chaleur (2, 3) d'un système d'échangeurs de chaleur (1) dans un véhicule automobile, **caractérisé par** une pièce de fixation (4a) avec un profilé de fixation, qui peut être joint à un profilé opposé (8), et deux ouvertures de réception identiques (4b, 4c) pour la réception par complémentarité de forme d'un échangeur de chaleur (3), dans lequel les deux ouvertures de réception (4b, 4c) sont disposées coaxialement l'une derrière l'autre et sont séparées l'une de l'autre côté frontal par une paroi de séparation (4d) et dans lequel le profilé opposé est réalisé sous la forme d'un dôme fileté (8), en particulier en matière plastique, frontalement saillant en direction de l'échangeur de chaleur (3).

2. Elément de fixation et de raccord selon la revendication 1, **caractérisé en ce que** les ouvertures de réception (4b, 4c) présentent un profil en C en vue de recevoir un tube collecteur cylindrique (9) de l'échangeur de chaleur (3).

3. Elément de fixation et de raccord selon la revendication 1 ou 2, **caractérisé en ce que** le profilé de fixation se présente sous la forme d'un profilé en caisson (4a, 4e) et le profilé opposé sous la forme d'un tronc en forme de caisson (8).

4. Elément de fixation et de raccord selon l'une quelconque des revendications 1 à 3, **caractérisé en ce que** le profilé de fixation (4a, 4e) peut être vissé sur le profilé opposé (8), en particulier au moyen d'une vis auto-taraudeuse.

5. Elément de fixation et de raccord selon au moins une des revendications précédentes, **caractérisé en ce qu'**il peut être fabriqué en une seule pièce sous forme de pièce en matière plastique moulée par injection (4).

6. Système d'échangeurs de chaleur (2, 3), qui sont raccordés les uns aux autres en une unité de construction ou un module (1), dans un véhicule automobile, **caractérisé en ce que** les échangeurs de chaleur (2, 3) sont raccordés les uns aux autres par les éléments de fixation et de raccord (4) selon au moins une des revendications 1 à 5.

7. Système selon la revendication 6, **caractérisé en ce qu'**un premier échangeur de chaleur est réalisé comme condenseur de réfrigérant (3) avec de tubes collecteurs (9) et un deuxième échangeur de chaleur est réalisé comme refroidisseur de réfrigérant (2) avec des caissons de réfrigérant (7) en matière plastique et **en ce que** le condenseur (3) est soutenu par au moins deux, de préférence quatre éléments de fixation et de raccord (4), qui sont fixés au caisson de réfrigérant (7) du refroidisseur de réfrigérant (2).

8. Système selon l'une quelconque des revendications 6 ou 7, **caractérisé en ce que** le dôme fileté (8) est formé par projection sur le caisson de réfrigérant (7) du refroidisseur de réfrigérant (2), en particulier d'un refroidisseur assemblé mécaniquement (2).

9. Module frontal (10) d'un véhicule automobile, comprenant des échangeurs de chaleur (12, 13) et un support de montage (11), dans lequel les échangeurs de chaleur (12, 13) sont raccordés par des éléments de fixation et de raccord (15), qui présentent deux ouvertures de réception (15f, 15g) disposées l'une à côté de l'autre et ouvertes côté frontal sur le même côté, destinées à recevoir les échangeurs de chaleur (12, 13), et à travers lesquelles des éléments de fixation et de raccord (15) sont fixés au support de montage (11), dans lequel les éléments de fixation et de raccord (15) présentent une pièce de fixation (15a) avec un profilé de fixation (15b) et le support de montage (11) présente un profilé opposé en forme de dôme fileté (14) saillant frontalement en direction des échangeurs de chaleur (12, 13), qui peut être assemblé au profilé de fixation (15b).

10. Module frontal selon la revendication 9, **caractérisé en ce qu'**un premier échangeur de chaleur est réalisé comme condenseur de réfrigérant (13) avec des tubes collecteurs (17) et un deuxième échangeur de chaleur est réalisé comme échangeur de chaleur (12) entièrement métallique, en particulier entièrement en aluminium, et **en ce que** les tubes collecteurs (17) et les caissons collecteurs métalliques, en particulier en aluminium (16) sont soutenus, côté frontal et en complémentarité de forme, par au moins deux, de préférence quatre éléments de fixation (15).

11. Module frontal selon la revendication 9 ou 10, **caractérisé en ce qu'**un élément de compensation élastique (18) peut être introduit dans l'ouverture de réception (15g).
